# EUROPEAN PATENT APPLICATION

(11) **EP 4 498 461 A2**
(43) Date of publication of application: **29.01.2025**
(21) Application number: 24186073.3
(22) Date of filing: 02.07.2024
(51) Int. Cl.: H01M 8/18, H01M 50/417

(54) **AQUEOUS ELECTROLYTE CONTAINING VANADIUM ION AND VANADIUM ION BATTERY INCLUDING THE SAME**

(30) Priority: 04.07.2023 KR 20230086608
(71) Applicant: Standard Energy Inc., Yuseong-gu, Daejeon 34014 (KR)
(72) Inventor: LEE, Dongyoung, 34014 Daejeon (KR); KIM, Dongheun, 34014 Daejeon (KR)
(74) Representative: Vossius & Partner Patentanwälte Rechtsanwälte mbB

(57) **Abstract**

Disclosed are an aqueous electrolyte containing vanadium ions and a vanadium ion battery including the same. More specifically, disclosed is an aqueous electrolyte containing vanadium ions in which an oxidation number of the vanadium ions is adjusted such that a decrease in charging energy (capacity) resulting from a difference between a vanadium ions concentration of an aqueous electrolyte containing vanadium ions in a positive-electrode and a vanadium ions concentration of an aqueous electrolyte containing vanadium ions in a negative-electrode in charging and discharging a vanadium ion battery using the aqueous electrolyte containing vanadium ions is reduced. Further, a vanadium ion battery including the aqueous electrolyte is disclosed.

## Description

### CROSS-REFERENCE TO RELATED APPLICATION

This application claims priority from Korean Patent Application No. 10-2023-0086608 filed on July 4, 2023 in the Korean Intellectual Property Office, and all the benefits accruing therefrom under 35 U.S.C. 119, the contents of which in its entirety are herein incorporated by reference.

### BACKGROUND

### Field

The present disclosure relates to an aqueous electrolyte containing vanadium ions and a vanadium ion battery including the same. More specifically, the present disclosure relates to an aqueous electrolyte containing vanadium ions in which an oxidation number of the vanadium ions is adjusted such that a decrease in charging energy (capacity) resulting from a difference between a vanadium ions concentration of an aqueous electrolyte containing vanadium ions in a positive-electrode and a vanadium ions concentration of an aqueous electrolyte containing vanadium ions in a negative-electrode in charging and discharging a vanadium ion battery using the aqueous electrolyte containing vanadium ions is reduced. Further, a vanadium ion battery including the aqueous electrolyte is disclosed.

### Description of Related Art

Unlike conventional secondary batteries, a redox flow battery (RFB) has a system in which an active material in electrolyte is oxidized and reduced to charge and discharge the battery and refers to an electrochemical storage device that stores electrical energy therein in a form of chemical energy of the electrolyte.

The electrolyte of an oxidation/reduction-based secondary battery uses a material with a redox couple. In the electrolyte of an early oxidation/reduction-based secondary battery, redox couples of different materials are applied to the positive-electrode and the negative-electrode, respectively. However, during charging and discharging, a crossover in which the different ionized materials cross each other through a separator occurs, resulting in a decrease in battery capacity. In one example, the crossover in which the vanadium ions of vanadium electrolyte cross over each other through the separator may occur. Thus, depending on a type of the separator, an amount by and a rate at which the vanadium ions migrate may vary, which may affect the difference between the vanadium ion concentrations in the positive-electrode and the negative-electrode.

Accordingly, it has been proposed to use the same material, that is, vanadium in both the positive-electrode and the negative-electrode as a way to alleviate the ion crossover. Since the electrolyte containing vanadium ions is an aqueous electrolyte, it not only has high stability against explosions when being applied to secondary batteries, but also increases the lifespan of the battery. For this reason, the electrolyte containing vanadium ions has been used until recently.

The oxidation/reduction-based secondary battery including the aqueous electrolyte containing vanadium ions that uses the vanadium ions as an active material has the longest lifespan among the oxidation/reduction-based secondary batteries and is advantageous in increasing capacity. In the oxidation/reduction-based secondary battery including the aqueous electrolyte containing vanadium ions, the electrolyte can be removed and reused via the electrochemical reaction of charging and discharging the secondary battery, thereby achieving the advantage of being cost-effective.

Regarding the aqueous electrolyte containing vanadium ions used in each of the positive-electrode and the negative-electrode, a vanadium compound with a vanadium ion oxidation number of V⁴⁺ is required for the positive-electrode, and a vanadium compound with a vanadium ion oxidation number of V³⁺ is required for the negative-electrode, based on a fully discharged state. Further, in a fully charged state, a vanadium compound with a vanadium ion oxidation number of V⁵⁺ is required for the positive-electrode, and a vanadium compound with a vanadium ion oxidation number of V²⁺ is required for the negative-electrode. The charge/discharge reaction occurs as the vanadium ion oxidation number of the vanadium active material changes. For a reversible electrochemical reaction to occur, it is important to manufacture the positive-electrode and the negative-electrode such that an oxidation number of the vanadium ions of the positive-electrode electrolyte and an oxidation number of the vanadium ions of the negative-electrode electrolyte satisfy the above requirements.

The positive-electrode contains an electrolyte solution (electrolyte) in which the positive-electrode redox couple (V⁴⁺/V⁵⁺) is dissolved. The negative-electrode contains an electrolyte solution (electrolyte) in which the negative-electrode redox couple (V²⁺/V³⁺) is dissolved. Thus, a half reaction occurs in each of the positive-electrode and the negative-electrode as follows:
Half reaction in the positive-electrode: V⁵⁺ + e- ←→ V⁴⁺
Half reaction in the negative-electrode: V²⁺ ←→ V³⁺ + e-

In general, regarding an aqueous electrolyte containing vanadium ions, an electrolyte with a vanadium ion oxidation number of 3.5+ may be commonly used as the electrolyte supplied to the negative-electrode and the electrolyte supplied to the positive-electrode.

However, when using the electrolyte with the vanadium ion oxidation number of 3.5+, a following problem occurs: as charging and discharging are repeated, a difference between the vanadium ion concentrations in the positive-electrode and the negative-electrode becomes larger, such that a decrease in charging energy (capacity) occurs.

Specifically, when charging an oxidation/reduction-based secondary battery using an aqueous electrolyte containing vanadium ions, a concentration difference phenomenon occurs in which the vanadium ion concentration of the negative-electrode decreases while the vanadium ion concentration of the positive-electrode increases. Accordingly, the charging energy is reduced, which reduces the energy density, and ultimately reduces the lifespan and efficiency of the oxidation/reduction-based secondary battery, which may lead to performance degradation.

### SUMMARY

A purpose of the present disclosure is to provide an aqueous electrolyte containing vanadium ions in which an oxidation number of the vanadium ions is adjusted such that decrease in performance of the oxidation/reduction-based secondary battery, especially, charging energy (capacity) thereof is minimized.

Another purpose of the present disclosure is to provide a vanadium ion battery as an oxidation/reduction-based secondary battery whose a volume is significantly reduced by excluding an electrolyte tank and a fluid pump, wherein the electrolyte containing the vanadium ions according to the present discourse is contained in the battery.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

One aspect of the present disclosure provides a vanadium ion battery (VIB) comprising: at least one vanadium ion battery unit cell, wherein each of the at least one vanadium ion battery unit cell includes: a positive-electrode current collector; a negative-electrode current collector spaced apart from the positive-electrode current collector; a separator disposed between the positive-electrode current collector and the negative-electrode current collector; a positive-electrode electrolyte reservoir defined between the positive-electrode current collector and the separator; and a negative-electrode electrolyte reservoir defined between the negative-electrode current collector and the separator, wherein as a positive-electrode electrolyte containing vanadium ions is received in the positive-electrode electrolyte reservoir, wherein a negative-electrode electrolyte containing vanadium ions is received in the negative-electrode electrolyte reservoir, wherein each of the positive-electrode and negative-electrode electrolytes contains an acidic solution and vanadium ions having a vanadium ion oxidation number greater than 3.50+ and lower than 4.00+.

In accordance with some embodiments of the vanadium ion battery of the present disclosure, the vanadium ion oxidation number of each of the positive-electrode and negative-electrode electrolytes is greater than 3.50+ and lower than or equal to 3.80+. For example, the vanadium ion oxidation number of each of the positive-electrode and negative-electrode electrolytes may be 3.55+ or greater and lower than or equal to 3.80+.

In accordance with some embodiments of the vanadium ion battery of the present disclosure, the vanadium ions of each of the positive-electrode and negative-electrode electrolytes are supplied from a vanadium oxide.

In accordance with some embodiments of the vanadium ion battery of the present disclosure, the vanadium oxide includes at least one selected from a group consisting of V₂O₅, VOSO₄, V₂O₃, NH₄VO₃ and V₂O₄.

In accordance with some embodiments of the vanadium ion battery of the present disclosure, the acidic solution includes at least one selected from a group consisting of sulfuric acid, hydrochloric acid, nitric acid, and phosphoric acid solutions.

In accordance with some embodiments of the vanadium ion battery of the present disclosure, each vanadium ion battery unit cell further includes a communication channel communicating the positive-electrode electrolyte reservoir and the negative-electrode electrolyte reservoir to each other.

In accordance with some embodiments of the vanadium ion battery of the present disclosure, the positive-electrode current collector includes a positive-electrode metal current collector and a positive-electrode carbon current collector, wherein the negative-electrode current collector includes a negative-electrode metal current collector and a negative-electrode carbon current collector.

In accordance with some embodiments of the vanadium ion battery of the present disclosure, each vanadium ion battery unit cell further includes: a positive-electrode solid electrode received in the positive-electrode electrolyte reservoir and impregnated with the positive-electrode electrolyte; and a negative-electrode solid electrode received in the negative-electrode electrolyte reservoir and impregnated with the negative-electrode electrolyte.

In accordance with some embodiments of the vanadium ion battery of the present disclosure, the separator is a hydrocarbon-based separator including a hydrocarbon-based polymer.

In accordance with some embodiments of the vanadium ion battery of the present disclosure, the hydrocarbon-based separator is made of the hydrocarbon-based polymer, or is formed by coating the hydrocarbon-based polymer on one surface or both opposing surfaces of a substrate.

In accordance with some embodiments of the vanadium ion battery of the present disclosure, the hydrocarbon-based polymer may include a cationic conductive hydrocarbon-based polymer.

In accordance with some embodiments of the vanadium ion battery of the present disclosure, the hydrocarbon-based polymer includes at least one selected from a group consisting of a polyimide-based polymer, a polyetheretherketone-based polymer, a polyethersulfone-based polymer, and a polybenzimidazole-based polymer.

The electrolytes containing vanadium ions in accordance with the present disclosure may be provided such that the vanadium ion oxidation number exceeds 3.50+.

When applying the aqueous electrolyte containing vanadium ions in which the vanadium ion oxidation number exceeding 3.50+ in accordance with the present disclosure to the secondary battery, the reduction in charging energy (capacity) resulting from the difference between the vanadium ion concentrations in the positive-electrode and the negative-electrode when the battery is charged and discharged may be minimized.

When applying the aqueous electrolyte containing vanadium ions in which the vanadium ion oxidation number exceeding 3.50+ in accordance with the present disclosure to the secondary battery, the energy density of the vanadium ion battery may be significantly increased, and the efficiency and lifespan of the vanadium ion battery may be improved. This is because of followings: the battery with high energy density has a relatively low SoC (Stage of Charge) even when being charged with the same amount of energy, so that the potential difference between the positive-electrode and the negative-electrode becomes small. Thus, there is less possibility of an irreversible reaction such as hydrogen generation. Further, the battery with the high energy density uses a smaller DoD (Depth of Discharge) even when discharging the same amount of energy. Thus, the long-term lifespan of the battery may be achieved and performance may be more efficient.

The vanadium ion battery in accordance with the present disclosure is designed with a structure excluding the electrolyte storage tank and the fluid pump for electrolyte flow present in a conventional redox flow battery (RFB). A space may be secured when the vanadium ion battery in accordance with the present disclosure is used to manufacture a large energy storage system (ESS).

Since the battery using the electrolyte containing the vanadium ion of the present disclosure has a higher energy density than that of the battery using the conventional vanadium electrolyte having the vanadium ion oxidation number of 3.50+. Thus, the size of the aqueous secondary battery to which the electrolyte is applied may be further reduced.

When applying the aqueous electrolyte containing vanadium ions in accordance with the present disclosure to the secondary battery, the reduction in charging energy (capacity) may be lowered in the vanadium ion battery with a sealed structure.

Effects of the present disclosure are not limited to the effects mentioned above, and other effects not mentioned will be clearly understood by those skilled in the art from the descriptions below.

### BRIEF DESCRIPTION OF DRAWINGS

FIG. 1 is an exploded perspective view of a vanadium ion battery unit cell according to an embodiment of the present disclosure.
FIG. 2 is a perspective view of a vanadium ion battery unit cell according to an embodiment of the present disclosure.
FIG. 3 is a cross-sectional view as taken along a line 3-3 of the vanadium ion battery unit cell as shown in FIG. 2.
FIG. 4 is a perspective view briefly showing a structure of a vanadium ion battery in which vanadium ion battery unit cells are stacked according to an embodiment of the present disclosure.
FIG. 5 shows a titration graph for identifying the vanadium ion oxidation number of an aqueous electrolyte containing vanadium ions according to an embodiment of the present disclosure.

### DETAILED DESCRIPTIONS

Advantages and features of the present disclosure, and a method of achieving the advantages and features will become apparent with reference to embodiments described later in detail together with the accompanying drawings. However, an embodiment of the present disclosure is not limited to the embodiments as disclosed under, but may be implemented in various different forms. Thus, these embodiments are set forth only to make the present disclosure complete, and to completely inform the scope of the present disclosure to those of ordinary skill in the technical field to which the present disclosure belongs, and the present disclosure is only defined by the scope of the claims.

For simplicity and clarity of illustration, elements in the drawings are not necessarily drawn to scale. The same reference numbers in different drawings represent the same or similar elements, and as such perform similar functionality. Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure. Examples of various embodiments are illustrated and described further below. It will be understood that the description herein is not intended to limit the claims to the specific embodiments described. On the contrary, it is intended to cover alternatives, modifications, and equivalents as may be included within the spirit and scope of the present disclosure as defined by the appended claims.

A shape, a size, a ratio, angle, a number, etc. disclosed in the drawings for illustrating embodiments of the present disclosure are illustrative, and an embodiment of the present disclosure is not limited thereto.

The terminology used herein is directed to the purpose of describing particular embodiments only and is not intended to be limiting of the present disclosure. As used herein, the singular constitutes "a" and "an" are intended to include the plural constitutes as well, unless the context clearly indicates otherwise. It will be further understood that the terms "comprise", "comprising", "include", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of associated listed items. Expression such as "at least one of" when preceding a list of elements may modify the entire list of elements and may not modify the individual elements of the list. In interpretation of numerical values, an error or tolerance therein may occur even when there is no explicit description thereof.

It will also be understood that when a first element or layer is referred to as being present "on" a second element or layer, the first element may be disposed directly on the second element or may be disposed indirectly on the second element with a third element or layer being disposed between the first and second elements or layers. It will also be understood that when a first element or layer is referred to as being present "under" a second element or layer, the first element may be disposed directly under the second element or may be disposed indirectly under the second element with a third element or layer being disposed between the first and second elements or layers.

It will be understood that when an element or layer is referred to as being "connected to", or "coupled to" another element or layer, it may be directly connected to or coupled to another element or layer, or one or more intervening elements or layers therebetween may be present. In addition, it will also be understood that when an element or layer is referred to as being "between" two elements or layers, it may be the only element or layer between the two elements or layers, or one or more intervening elements or layers therebetween may also be present.

In addition, it will also be understood that when an element or layer is referred to as being "between" two elements or layers, it may be the only element or layer between the two elements or layers, or one or more intervening elements or layers therebetween may also be present.

Further, as used herein, when a layer, film, region, plate, or the like is disposed "on" or "on a top" of another layer, film, region, plate, or the like, the former may directly contact the latter or still another layer, film, region, plate, or the like may be disposed between the former and the latter. As used herein, when a layer, film, region, plate, or the like is directly disposed "on" or "on a top" of another layer, film, region, plate, or the like, the former directly contacts the latter and still another layer, film, region, plate, or the like is not disposed between the former and the latter. Further, as used herein, when a layer, film, region, plate, or the like is disposed "below" or "under" another layer, film, region, plate, or the like, the former may directly contact the latter or still another layer, film, region, plate, or the like may be disposed between the former and the latter. As used herein, when a layer, film, region, plate, or the like is directly disposed "below" or "under" another layer, film, region, plate, or the like, the former directly contacts the latter and still another layer, film, region, plate, or the like is not disposed between the former and the latter.

In descriptions of temporal relationships, for example, temporal precedent relationships between two events such as "after", "subsequent to", "before", etc., another event may occur therebetween unless "directly after", "directly subsequent" or "directly before" is not indicated.

When a certain embodiment may be implemented differently, a function or an operation specified in a specific block may occur in a different order from an order specified in a flowchart. For example, two blocks in succession may be actually performed substantially concurrently, or the two blocks may be performed in a reverse order depending on a function or operation involved.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described under could be termed a second element, component, region, layer or section, without departing from the spirit and scope of the present disclosure.

Spatially relative terms, such as "beneath," "below," "lower," "under," "above," "upper," and the like, may be used herein for ease of illustration to illustrate one element or feature's relationship to another element or feature as illustrated in the figures. It will be understood that the spatially relative terms are intended to encompass different orientations of the device in use or in operation, in addition to the orientation depicted in the figures. For example, when the device in the drawings may be turned over, elements described as "below" or "beneath" or "under" other elements or features would then be oriented "above" the other elements or features. Thus, the example terms "below" and "under" may encompass both an orientation of above and below. The device may be otherwise oriented, for example, rotated 90 degrees or at other orientations, and the spatially relative descriptors used herein should be interpreted accordingly.

The features of the various embodiments of the present disclosure may be partially or entirely combined with each other, and may be technically associated with each other or operate with each other. The embodiments may be implemented independently of each other and may be implemented together in an association relationship.

In interpreting a numerical value, the value is interpreted as including an error range unless there is no separate explicit description thereof.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, "embodiments," "examples," "aspects, and the like should not be construed such that any aspect or design as described is superior to or advantageous over other aspects or designs.

Further, the term 'or' means 'inclusive or' rather than 'exclusive or'. That is, unless otherwise stated or clear from the context, the expression that 'x uses a or b' means any one of natural inclusive permutations.

The terms used in the description below have been selected as being general and universal in the related technical field. However, there may be other terms than the terms depending on the development and/or change of technology, convention, preference of technicians, etc. Therefore, the terms used in the description below should not be understood as limiting technical ideas, but should be understood as examples of the terms for illustrating embodiments.

Further, in a specific case, a term may be arbitrarily selected by the applicant, and in this case, the detailed meaning thereof will be described in a corresponding description section. Therefore, the terms used in the description below should be understood based on not simply the name of the terms, but the meaning of the terms and the contents throughout the Detailed Descriptions.

Throughout the present disclosure, "A and/or B" means A, B, or A and B, unless otherwise specified, and "C to D" means C inclusive to D inclusive unless otherwise specified.

"At least one" should be understood to include any combination of one or more of listed components. For example, at least one of first, second, and third components means not only a first, second, or third component, but also all combinations of two or more of the first, second, and third components.

In the present disclosure, "aqueous electrolyte containing vanadium ions" may be interpreted as referring to "vanadium ion electrolyte", "electrolyte using (employing) vanadium ion", "electrolyte containing vanadium oxide", "vanadium electrolyte", "electrolyte containing a vanadium active material", etc. unless otherwise stated.

In the present disclosure, the vanadium ion oxidation number electrolyte may refer to the vanadium ion oxidation number of the electrolyte itself at the time of preparation or supply, or an average value of the vanadium ion oxidation numbers of the electrolytes respectively supplied to the positive-electrode and negative-electrode, or the average value of the vanadium ion oxidation number of the positive-electrode electrolyte and the vanadium ion oxidation number of the negative-electrode electrolyte when the secondary battery performs charging and discharging.

### <Electrolyte containing vanadium ions>

Hereinafter, the aqueous electrolyte containing vanadium ions according to one aspect of the present disclosure is described in detail.

Conventionally, regarding an aqueous electrolyte containing vanadium ions, an electrolyte with a vanadium ion oxidation number of 3.5+ may be commonly used as the electrolyte supplied to the negative-electrode and the electrolyte supplied to the positive-electrode. However, when using the electrolyte with the vanadium ion oxidation number of 3.5+, a following problem occurs: as charging and discharging are repeated, a difference between the vanadium ion concentrations in the positive-electrode and the negative-electrode becomes larger, such that a decrease in charging energy (capacity) occurs. Specifically, when charging an oxidation/reduction-based secondary battery using an aqueous electrolyte containing vanadium ions, a concentration difference phenomenon occurs in which the vanadium ion concentration of the negative-electrode decreases while the vanadium ion concentration of the positive-electrode increases. Accordingly, the charging energy is reduced, which reduces the energy density, and ultimately reduces the lifespan and efficiency of the oxidation/reduction-based secondary battery, which may lead to performance degradation.

Thus, the inventors of the present disclosure have experimentally identified that when the vanadium electrolyte with a vanadium ion oxidation number exceeding 3.50+ is used rather than the vanadium electrolyte with a vanadium ion oxidation number of 3.50+ that has been used conventionally, the charging energy (capacity) reduction when charging and discharging the oxidation/reduction-based secondary battery is repeated multiple times may be resolved even when a difference between the vanadium ion concentrations in the positive-electrode and the negative-electrode occurs. In this way, the present disclosure has been completed.

The aqueous electrolyte containing vanadium ions in accordance with the present disclosure contains vanadium ions and an acidic solution and is characterized in that the vanadium ion oxidation number is greater than 3.50+, for example 3.55+ or greater. Thus, the effect of solving the problem of the reduction in the charging energy may be achieved. In particular, as the number of charging and discharging increases, the above effect further increases.

Specifically, it was experimentally identified that when an electrolyte with a vanadium ion oxidation number greater than 3.50+ was used rather than the conventional electrolyte with a vanadium ion oxidation number of 3.50+, the charging energy tended to be somewhat lower after several charging and discharging, while the charging energy actually increased as the charging and discharging were repeated dozens or hundreds of times. Considering that the oxidation/reduction-based secondary battery generally performs charging and discharging hundreds or thousands of times or greater, the above experimental result of the present disclosure may be interpreted as very meaningful result. In particular, because the energy density of the electrolytes containing vanadium ions in accordance with the present disclosure may be improved, a size of the oxidation/reduction-based secondary battery using the aqueous electrolyte according to the present disclosure may be significantly reduced, and the efficiency and the lifespan of oxidation/reduction-based secondary battery may be improved.

Further, when the vanadium ion oxidation number of the electrolyte becomes lower than 3.50+, not only is the charging energy lowered under several times of charging and discharging, but also the charging energy is further lowered under dozens or hundreds times of charging and discharging.

To the contrary, when the vanadium ion oxidation number increases too much, the effect of alleviating the reduction of charging energy decreases again. For example, the vanadium ion oxidation number may be lower than 4.00+, for example, the vanadium ion oxidation number may be lower than 3.70+, for example, the vanadium ion oxidation number may be 3.65+ or lower. The upper limit of the vanadium ion oxidation number may vary depending on a path along which the vanadium ions migrate.

According to one embodiment of the present disclosure, the vanadium ions of the vanadium electrolyte of the present disclosure may be supplied from the vanadium oxide. For example, the vanadium oxide may include one or more selected from the group consisting of V₂O₅, VOSO₄, V₂O₃, NH₄VO₃ and V₂O₄. However, embodiments of the present disclosure are not necessarily limited thereto, and the vanadium oxide may be selected based on the electrolyte production conditions, the electrolyte production target amount, etc.

According to one embodiment of the present disclosure, a form in which the vanadium oxide is supplied is not particularly limited, but may be, for example, a powder type in terms of process efficiency.

According to one embodiment of the present disclosure, the acidic solution may include one or more selected from the group consisting of sulfuric acid, hydrochloric acid, nitric acid, and phosphoric acid solutions. In one example, a sulfuric acid solution may be used as the acidic solution.

The concentration of the acidic solution may be, for example, in a range of 0.1 M to 10 M, for example, 1 M to 8 M, for example, 2 M to 5 M. However, embodiments of the present disclosure are not necessarily limited thereto. The concentration of the acidic solution may be appropriately adjusted depending on a type of the acid solution as used, etc.

The concentration of the vanadium ions in the electrolyte containing the vanadium may be in a range of 1.5 M to 3.0 M.

### <Vanadium ion battery>

Hereinafter, a vanadium ion battery of the present disclosure is described in detail.

As an overall size of a redox flow battery using the vanadium electrolyte has become very large due to an electrolyte storage tank and a fluid pump for electrolyte flow in a conventional redox flow battery (RFB), a space constraint and a design difficulty occur. Accordingly, in accordance with the present disclosure, a vanadium ion battery (VIB) as an oxidation/reduction-based secondary battery with a sealed structure free of the electrolyte tank and the fluid pump is employed. Specifically, the VIB is designed using one unit cell or by stacking at least two unit cells, wherein each unit cell includes a positive-electrode current collector; a negative-electrode current collector spaced apart from the positive-electrode current collector; and a separator disposed between the positive-electrode current collector and the negative-electrode current collector, such that the electrolyte circulates inside the battery by itself without the pump. As a result, a power density may be improved by 2 to 50 times, and the stability of energy output may be improved, compared to the conventional oxidation/reduction-based secondary battery.

The vanadium ion battery according to an embodiment of the present disclosure may include at least one vanadium ion battery unit cell. In one example, the vanadium ion battery according to an embodiment of the present disclosure may include at least three vanadium ion battery unit cells as stacked on top of each other.

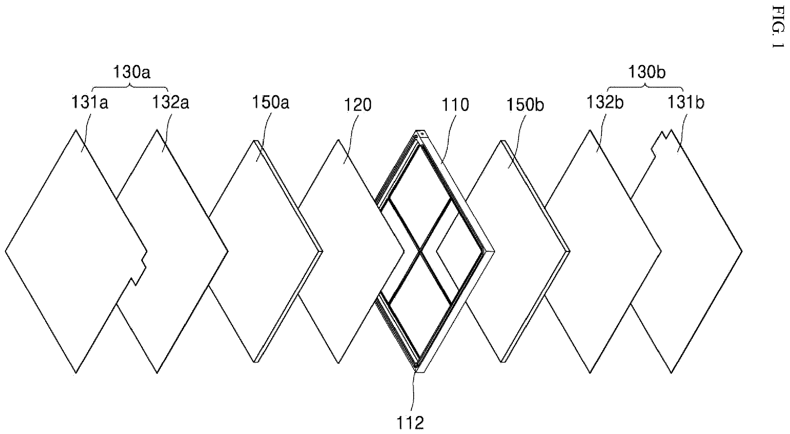

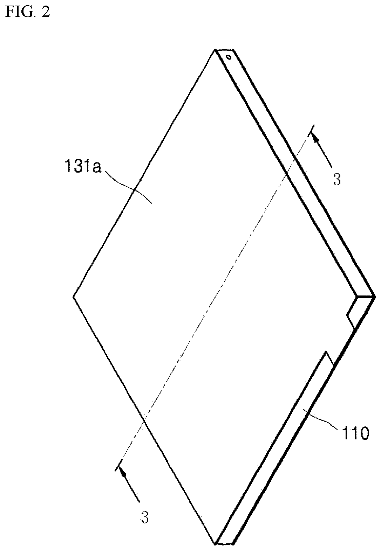

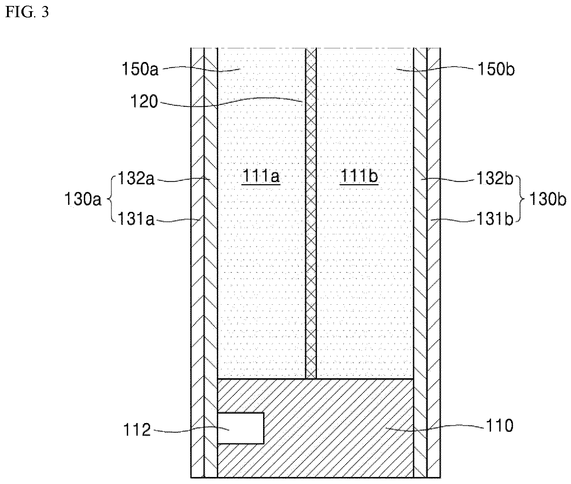

Referring to FIG. 1 to FIG. 3, the vanadium ion battery unit cell is described in detail.

According to the present disclosure, a vanadium ion battery unit cell 100 includes a positive-electrode current collector 130a; a negative-electrode current collector 130b disposed spaced apart from the positive-electrode current collector; a separator 120 disposed between the positive-electrode current collector 130a and the negative-electrode current collector 130b; a positive-electrode electrolyte reservoir 111a formed between the positive-electrode current collector 130a and the separator 120; and a negative-electrode electrolyte reservoir 111b formed between the negative-electrode current collector 130b and the separator 120.

Each of the positive-electrode current collector 130a and negative-electrode current collector 130b of the vanadium ion battery unit cell 100 may be manufactured by stacking each of metal current collectors 131a and 131b and each of carbon current collectors 132a and 132b. Each of the metal current collectors 131a and 131b may be made of a metal with high electrical conductivity (for example, copper or aluminum). The metal current collectors 131a and 131b may be connected to a busbar for electrically connecting the unit cells to each other. Each of the carbon current collectors 132a and 132b may be made of a material such as graphite, carbon, carbon plastic, etc. to have high electrical conductivity and high acid resistance. Each of the metal current collectors 131a and 131b and the carbon current collectors 132a and 132b may be formed in a rectangular plate shape.

The vanadium ion battery unit cell 100 may include a support frame 110. The separator 120 may be placed in a space defined by the positive-electrode current collector 130a, the negative-electrode current collector 130b, and the support frame 110. Thus, the positive-electrode electrolyte reservoir 111a may be defined by the separator 120, the support frame 110, and the positive-electrode current collector 130a. The negative-electrode electrolyte reservoir 111b may be defined by the separator 120, the support frame 110, and the negative-electrode current collector 130b. The support frame 110 may be attached to the carbon current collector 132a of the positive-electrode current collector 130a and the carbon current collector 132b of the negative-electrode current collector 130b. Thus, the positive-electrode electrolyte reservoir 111a and the negative-electrode electrolyte reservoir 111b may be sealed. Thus, the airtightness required for the vanadium ion battery may be secured.

The electrolyte containing the vanadium ions as the positive-electrode electrolyte may be supplied to the positive-electrode electrolyte reservoir 111a. The electrolyte containing the vanadium ions as the negative-electrode electrolyte may be supplied to the negative-electrode electrolyte reservoir 111b. The supplied electrolyte may be embodied as an aqueous electrolyte containing vanadium ions according to an aspect of the present disclosure as described above, and thus may be composed of vanadium ions with a vanadium ion oxidation number greater than 3.50+ and lower than 4.00+ and the acidic solution. According to one embodiment, the electrolyte may contain vanadium ions with a vanadium ion oxidation number greater than 3.50+ and lower than or equal to 3.80+. For example, the electrolyte may contain vanadium ions with a vanadium ion oxidation number of 3.55+ or greater and lower than or equal to 3.80+.

According to one embodiment of the present disclosure, the vanadium ion battery unit cell 100 may include a communication channel 112 communicating the positive-electrode electrolyte reservoir and the negative-electrode electrolyte reservoir with each other. The communication channel 112 may be defined in the support frame 110.

The communication channel 112 is configured to resolve the imbalance due to the crossover in which ionized substances (vanadium ions, ionized H₂O, ions of acidic aqueous solution, etc.) cross each other through the separator 120 during charging and discharging of the secondary battery.

More specifically, a volume of the electrolyte contained in the positive-electrode electrolyte reservoir 111a and a volume of the electrolyte contained in the negative-electrode electrolyte reservoir 111b may be different from each other as the charging and discharging are repeated. When charging the vanadium ion battery, some ions (ionized H₂O, vanadium ions, SO₄²⁻, etc.) may migrate through the separator. Additionally, the divalent vanadium ions present in the negative-electrode electrolyte reservoir may strongly attract the ionized H₂O to increase a volume of the negative-electrode electrolyte. As a result, the vanadium ion concentration of the negative-electrode may decrease, while the vanadium ion concentration of the positive-electrode may increase.

In this way, as the charging and discharging are repeated, an imbalance occurs in which the volumes of the negative-electrode electrolyte and the positive-electrode electrolyte are different from each other. Therefore, in accordance with the present disclosure, the electrolyte may flow from the electrolyte reservoir of the relatively larger volume to the electrolyte reservoir of the relatively smaller volume through the communication channel 112, thereby resoling the imbalance between the volume of the electrolyte contained in the positive-electrode electrolyte reservoir 111a and the volume of the electrolyte contained in the negative-electrode electrolyte reservoir 111b.

When discharging the oxidation/reduction-based secondary battery using an aqueous electrolyte containing vanadium ions, the water, vanadium ions, and negative ions (e.g., HSO₄⁻when the sulfuric acid solution is the acidic solution) contained in the acidic solution in the electrolyte may flow from the negative-electrode electrolyte to the positive-electrode electrolyte through the communication channel 112. As a result, the phenomenon in which the vanadium ion concentration of the negative-electrode electrolyte decreases, while the vanadium ion concentration of the positive-electrode electrolyte increases may become more severe.

However, in the vanadium ion battery (VIB) of the present disclosure, the decrease in the energy density due to the vanadium ion concentration imbalance phenomenon between the positive-electrode electrolyte and the negative-electrode electrolyte that occurs during the charging and discharging may be resolved by applying the aqueous electrolyte containing vanadium ions according to an aspect of the present disclosure.

Furthermore, as the vanadium ion battery is repeatedly charged and discharged, the charging energy may be improved compared to when using the conventional vanadium ion electrolyte having the vanadium ion oxidation number of 3.50+. As a result, the efficiency and lifespan of the vanadium ion battery may be increased, and the size of the vanadium ion battery may be reduced.

According to one embodiment of the present disclosure, the vanadium ion battery unit cell 100 may further include a positive-electrode solid electrode 150a disposed in the positive-electrode electrolyte reservoir 111a and impregnated with the positive-electrode electrolyte; and a negative-electrode solid electrode 150b disposed in the negative-electrode electrolyte reservoir 111b and impregnated with the negative-electrode electrolyte.

The positive-electrode solid electrode 150a and the negative-electrode solid electrode 150b may be impregnated with the positive-electrode electrolyte and the negative-electrode electrolyte, respectively, and may be received in the positive-electrode electrolyte reservoir 111a and the negative-electrode electrolyte reservoir 11 1b, respectively. Each of the positive-electrode solid electrode 150a and the negative-electrode solid electrode 150b may include carbon or a carbon-based material such as graphite felt, carbon fiber, carbon black, graphite powder, or graphene. The positive-electrode solid electrode 150a may be in close contact with the positive-electrode current collector 130a and the separator 120, while the negative-electrode solid electrode 150b may be in close contact with the negative-electrode current collector 130b and the separator 120.

The crossover in which the vanadium ions of vanadium electrolyte cross over each other through the separator may occur. Thus, depending on a type of the separator, an amount by and a rate at which the vanadium ions migrate may vary, which may affect the difference between the vanadium ion concentrations in the positive-electrode and the negative-electrode. Therefore, the separator 120 of the vanadium ion battery unit cell 100 in accordance with the present disclosure may include a hydrocarbon-based separator including a cationic conductive hydrocarbon-based polymer. Nafion^{®} which has been commonly used as the material of the separator is made of a fluorine-based cationic conductive polymer, and thus may emit the halogen substance, leading to contamination of the secondary battery. Further, in an aqueous secondary battery, pressure may be generated inside the cell due to micro-flow that occurs as protons (H⁺) migrate in the electrolyte and side reactions (generation of gases such as H₂, CO₂, etc.) that commonly occur in aqueous secondary batteries. Therefore, the separator 120 of the vanadium ion battery unit cell 100 in accordance with the present disclosure should have excellent mechanical strength to withstand the pressure in the vanadium ion battery (VIB) of the sealed structure in accordance with the present disclosure, and should be highly stable to prevent irreversibility and side reactions from occurring, and should maintain excellent acid resistance even when being immersed in the acidic electrolyte for a long time. For this reason, the hydrocarbon-based separator may be used.

The hydrocarbon-based separator may be made of the hydrocarbon-based polymer, or may be formed by coating the hydrocarbon-based polymer on a substrate. For example, a solution in which the hydrocarbon-based polymer is dissolved in a solvent may applied to one surface or both opposing surface of a porous substrate such that the substrate is impregnated with the solution, and then, the substrate having the solution impregnated therein may be dried. In this way, the coating may be achieved. The hydrocarbon-based polymer is a polymer including a carbon and hydrogen skeleton, and the carbon and hydrogen skeleton may be aliphatic, alicyclic, aromatic, and combinations thereof, and may further include heteroatoms such as oxygen, sulfur, nitrogen, silicone, boron and selenium. Non-limiting examples of the carbon and hydrogen skeleton may include an alkyl group, an alkenyl group, an alkynyl group, a heteroalkyl group, an aryl group, a heteroaryl group, an aralkyl group, a heteroaralkyl group, an amide group, a sulfonyl group, an ether group, a ketone group, a ester group, and a combination thereof. The hydrocarbon-based polymer may be substituted with substituents such as a cyano group, a nitro group, an amine group, a hydroxyl group, an alkyl group, an alkoxy group, a ketone group, a carboxyl group, an ether group, an ester group, a sulfonic group, a sulfonyl group, a silyl group, and the like.

The porous substrate may exhibit high tensile strength (for example, 100 MPa or greater) even at a small thickness and may have excellent impregnation of the hydrocarbon-based polymer therein and may have excellent coating properties after the drying. For example, a porous membrane made of polypropylene (PP) or polyethylene (PE) may be selected as the porous membrane. However, embodiments of the present disclosure are not necessarily limited thereto.

The hydrocarbon-based polymer may include any one of polyimide-based polymers, polyetheretherketone-based polymers, polyethersulfone-based polymers, and polybenzimidazole-based polymers.

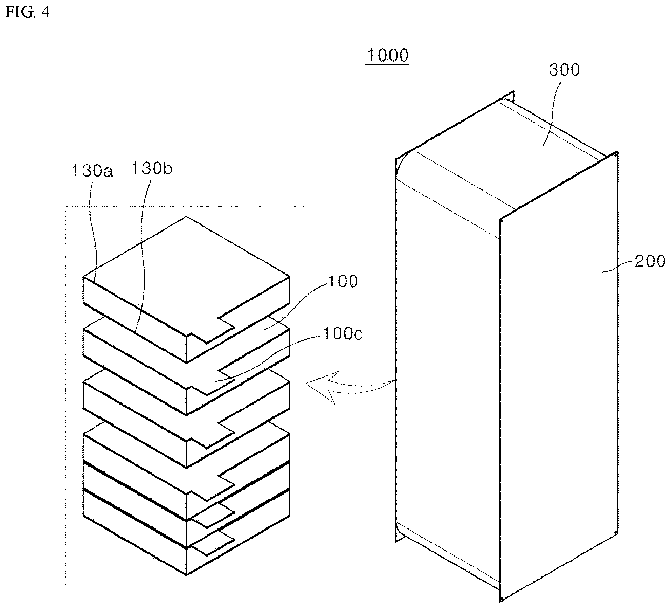

Referring to FIG. 4, a vanadium ion battery 1000 in accordance with the present disclosure may be manufactured by stacking a plurality of vanadium ion battery unit cells 100. The plurality of vanadium ion battery unit cells 100 may be electrically connected to each other via a busbar 200. A protrusion 100c may protrude from each of the metal current collectors 131a and 131b of each of the plurality of vanadium ion battery unit cells 100. Thus, the respective protrusions 100c of the plurality of vanadium ion battery unit cells 100 may be electrically connected to the bus bar 200. Thus, the plurality of vanadium ion battery unit cells 100 may be electrically connected to each other via the busbar 200.

A pair of endplates 300 are respectively disposed on a top and a bottom of a vertical stack of the plurality of vanadium ion battery unit cells 100. Each of the end plates 300 is made of a relatively high-strength insulating material or an insulated metal material.

The bus bar 200 transfers electricity generated from the plurality of unit cells 100 to an external load when the battery is discharged, and transfers external electricity from an external power source to the plurality of unit cells 100 when the battery is charged. The bus bar 200 may connect the plurality of unit cells 100 in parallel or series with each other. The bus bar 200 may extend so as to cover one side surface of the stack of the plurality of unit cells 100 and one side surface of each of the pair of end plates 300.

Hereinafter, Preparation Examples and Experimental Examples of the present disclosure are described to describe the present disclosure in more detail. However, Examples are embodiments of the present disclosure, and the technical idea of the present disclosure is not limited thereto.

### Preparation Example 1: Preparation of aqueous electrolyte containing vanadium ions

A stirrer was installed in a heating mantle heated to approximately 80°C, and then tertiary distilled water (DI water; DW) prepared using a tertiary ultrapure water device, 98% sulfuric acid (H₂SO₄), and 99.5% oxalic acid as a reducing agent were first added thereto. Then, V₂O₅ powders were added thereto at a small amount.

In this regard, in order to prepare 1L of the vanadium electrolyte, 236 ml of 98% H₂SO₄, 108 g of 99.5% oxalic acid, and 780 ml of DW were mixed with each other, and then 154 g of V₂O₅ powders were added thereto to prepare 1.7 M vanadium ion electrolyte. Then, heating and stirring was performed thereon at approximately 80°C for about 12 hours.

The vanadium was sufficiently dissolved in the sulfuric acid to prepare the vanadium electrolyte with a vanadium ion oxidation number of 4+. Then, the vanadium electrolyte with a vanadium ion oxidation number of 4+ was injected into a VRFB cell (manufactured by Standard Energy) to perform electrochemical reduction. Thus, the reduction occurred in the negative-electrode. Thus, the vanadium ion electrolyte with vanadium ion oxidation numbers of each of 3.45+, 3.50+, 3.55+, 3.60+, 3.65+, 3.70+, and 3.80+ was prepared.

In this regard, the vanadium ion oxidation number of the prepared electrolyte may be calculated based on Equation 1 as set forth below according to a titrimetric method using an oxidizing agent.Average vanadium ion oxidation number of electrolyte = 5 - {Vb / (Vb - Va)}

In the Equation 1 as set forth above, Vₐ refers to the amount (ml) of the oxidizing agent consumed when a state in which the vanadium ion oxidation number of vanadium electrolyte exceeds 3.00+ is oxidized to a state in which the vanadium ion oxidation number is 4.00+. V_{b} refers to the amount (ml) of the oxidizing agent consumed when a state in which the vanadium ion oxidation number of vanadium electrolyte exceeds 3.00+ is oxidized to a state in which the vanadium ion oxidation number is 5.00+.

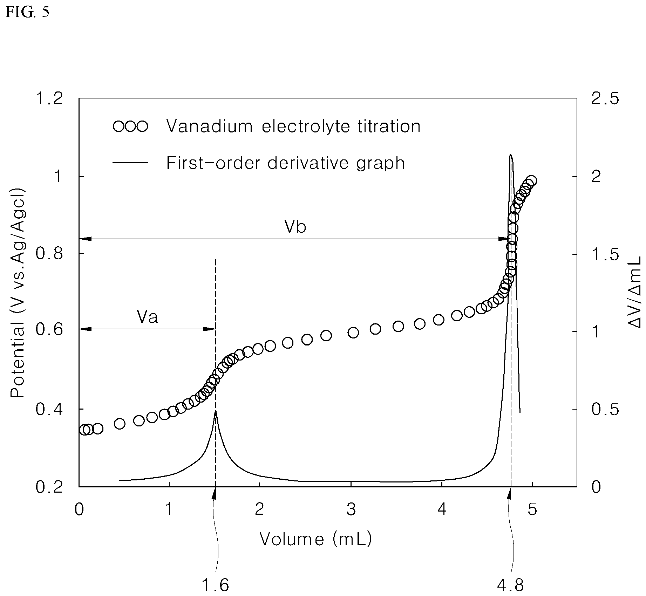

As shown in FIG. 5, while adding the oxidizing agent in a dropwise manner to the vanadium electrolyte with a vanadium ion oxidation number of 3.00+, the relative potential value (V) with respect to Ag/AgCl as a reference electrode was measured and a vanadium electrolyte titration graph was plotted based on the measurement. Then, a first-order derivative graph based on the vanadium electrolyte titration graph was plotted. There are two inflection points indicated by peaks on the derivative graph. In this regard, the inflection point means an equivalence point as the point at which the vanadium ion oxidation number of vanadium electrolyte changes. Based on the above inflection points, Vₐ as the amount (ml) of the oxidizing agent consumed when a state in which the vanadium ion oxidation number of vanadium electrolyte exceeds 3.00+ is oxidized to a state in which the vanadium ion oxidation number is 4.00+, and V_{b} as the amount (ml) of the oxidizing agent consumed when a state in which the vanadium ion oxidation number of vanadium electrolyte exceeds 3.00+ is oxidized to a state in which the vanadium ion oxidation number is 5.00+ may be identified. (V_{b} - Vₐ) means the amount (ml) of the consumed oxidizing agent. In FIG. 5, Potential (V vs Ag/AgCl) refers to the relative potential value (V) relative to Ag/AgCl as the reference electrode. ΔV/ΔmL means the differentiation of the change in the potential value (ΔV) with respect to the volume of the consumed oxidizing agent (ΔmL).

In examples of the present disclosure, 0.02M KMnO₄ was used as the oxidizing agent. Based on FIG. 5, Vₐ was 1.6 (ml) and V_{b} was 4.8 (ml). Thus, upon calculation according to the Equation 1 as set forth above, 5 - {4.8 / (4.8 - 1.6)} = 3.5. Thus, the vanadium ion oxidation number is 3.5+.

According to this titration method, the vanadium ion oxidation number value of each of the vanadium electrolytes as prepared above may be calculated.

### Preparation Example 2: Manufacturing of vanadium ion battery

Each of two current collectors was manufactured by stacking a carbon current collector (graphite composite, thickness: 0.2mm) and a metal current collector (aluminum foil, thickness: 0.2mm), and was used as each of the positive-electrode current collector and the negative-electrode current collector.

A positive ion exchange membrane (thickness: 20 *µ*m, Standard Energy) as manufactured by coating m-PBI (poly[2,2-(m-phenylene)-5,5bibenzimidazole) on a substrate made of polyethylene (PE) was used as a separator (hereinafter, 'PBI separator').

A hollow square support frame was provided. The positive-electrode current collector and the negative-electrode current collector were respectively disposed on both opposing surfaces of the support frame, and the PBI separator was placed in a hollow space of the support frame so as to be positioned at a center thereof. Thus, the positive-electrode electrolyte reservoir was defined by the positive-electrode current collector, the separator and the frame. he negative-electrode electrolyte reservoir was defined by the negative-electrode current collector, the separator and the frame. The communication channel connecting the positive-electrode electrolyte reservoir and the negative-electrode electrolyte reservoir to each other was formed in the support. Thus, the vanadium ion battery unit cell was manufactured.

### Experimental Example: Charging and discharging experiment of vanadium ion battery

In order to check the charging energy performance during charge and discharge based on the vanadium ion oxidation number of each electrolyte as prepared in Preparation Example 1, the prepared vanadium ion electrolyte with the vanadium ion oxidation number of 3.50+ in the Preparation Example 1 was added to each of the positive-electrode and the negative-electrode of the vanadium ion battery as manufactured in Preparation Example 2.

As for the charge/discharge conditions, the battery was charged with a constant current of 0.5 C until the voltage reached 1.70 V, and the battery was discharged with a constant current of 0.5 C until the voltage reached 1.10 V.

The charging and discharging were performed up to 500 cycles under the above charging and discharging conditions. The charging energy (wh) was calculated at each of 5, 100, 200, 300, 400, and 500 cycles. The charging energy is a value obtained by multiplying the charging voltage measured at each measurement time (sampling time) by the charging current (0.5 C) while the battery is being charged, and adding up the resulting values.

Then, on the battery including each of vanadium ion electrolytes with vanadium ion oxidation numbers of 3.45+, 3.50+, 3.55+, 3.60+, 3.65+, 3.70+, and 3.80+, charging and discharging was performed up to 500 cycles under the above charging and discharging conditions. The charging energy (wh) was calculated at each of 5, 100, 200, 300, 400, and 500 cycles.

The increase/decrease (percentage; %) in the charge energy of the battery including each of the vanadium ion electrolytes with vanadium ion oxidation numbers 3.45+, 3.50+, 3.55+, 3.60+, 3.65+, 3.70+, and 3.80+ relative to the charge energy of the battery including the vanadium ion electrolyte with the vanadium ion oxidation number 3.50+ was calculated based on Equation 2 as set forth below. The calculation result is listed in Table 1 as set forth below. Increase/decrease (percentage; %) in charging energy: {(Ex - E3.5) /E 3.5} × 100 (%)

In the Equation 2, E_{3.5} refers to the charge energy of the battery including the vanadium ion electrolyte with the vanadium ion oxidation number 3.50+. Eₓ refers to the charging energy of the battery including the vanadium ion electrolyte with the vanadium ion oxidation number x other than 3.50+.

**[Table 1]**

| | | Vanadium ion oxidation number | | | | | | |
|---|---|---|---|---|---|---|---|---|
| | | 3.45 | 3.50 (measured charge energy) | 3.55 | 3.60 | 3.65 | 3.70 | 3.80 |
| Charge/ discharge cycles | 5 | -12.8% | 0% (3.12wh) | -5.1% | -19.2% | -27.2% | -40.3% | -46.4% |
| | 100 | -17.2% | 0% (3.08wh) | -3.5% | -15.9% | -23.7% | -40.5% | -48.3% |
| | 200 | -20.0% | 0% (2.95wh) | +6.1% | -3.7% | -11.8% | -28.8% | -36.9% |
| | 300 | -21.1% | 0% (2.88wh) | +9.3% | +1.7% | -5.2% | -21.1% | -28.8% |
| | 400 | -21.9% | 0% (2.82wh) | +10.6% | +4.6% | -0.7% | -15.9% | -23.0% |
| | 500 | -22.3% | 0% (2.78wh) | +12.2% | +6.1% | +2.8% | -12.2% | -19.4% |

As may be identified in the Table 1 above, the increase/decrease (%) in the charging energy of the battery including the vanadium electrolyte with the vanadium ion oxidation number exceeding 3.50+ relative to the charge energy of the battery including the vanadium ion electrolyte with the vanadium ion oxidation number 3.50+ becomes the positive value (+) (that is, the increase) starting from 200 cycles of charging and discharging. Thus, it was identified that the charging energy of the battery including the vanadium electrolyte with the vanadium ion oxidation number exceeding 3.50+ was higher than that of the battery including the vanadium electrolyte with the vanadium ion oxidation number of 3.50+.

In this way, despite the difference between the vanadium ions concentration of the aqueous electrolyte containing vanadium ions in the positive-electrode and the vanadium ions concentration of an aqueous electrolyte containing vanadium ions in the negative-electrode when the vanadium ion battery is charged and discharged at least hundreds of times, the decrease in the charging energy of the battery may be minimized. This may mean that the energy density of the battery including the vanadium electrolyte in accordance with the present disclosure may be significantly improved, and thus, the lifespan and the efficiency of the aqueous electrolyte secondary battery using the vanadium electrolyte may be increased, and the battery size may be further reduced to remove the spatial constraint in terms of installation.

Although the embodiments of the present disclosure have been described in more detail with reference to the accompanying drawings, the present disclosure is not necessarily limited to the embodiments, and may be modified in a various manner within the scope of the technical spirit of the present disclosure. Accordingly, the embodiments as disclosed in the present disclosure are intended to describe rather than limit the technical idea of the present disclosure, and the scope of the technical idea of an embodiment of the present disclosure is not limited by these embodiments. Therefore, it should be understood that the embodiments described above are not restrictive but illustrative in all respects.

## Claims

1. A vanadium ion battery (VIB) comprising:
at least one vanadium ion battery unit cell (100), wherein each of the at least one vanadium ion battery unit cell (100) includes:
a positive-electrode current collector (130a);
a negative-electrode current collector (130b) spaced apart from the positive-electrode current collector (130a);
a separator (120) disposed between the positive-electrode current collector (130a) and the negative-electrode current collector (130b);
a positive-electrode electrolyte reservoir (111a) defined between the positive-electrode current collector (130a) and the separator (120); and
a negative-electrode electrolyte reservoir (111b) defined between the negative-electrode current collector (130b) and the separator (120),
wherein a positive-electrode electrolyte containing vanadium ions is received in the positive-electrode electrolyte reservoir (111a),
wherein a negative-electrode electrolyte containing vanadium ions is received in the negative-electrode electrolyte reservoir (111b), and
wherein each of the positive-electrode and negative-electrode electrolytes contains an acidic solution and vanadium ions having a vanadium ion oxidation number greater than 3.50+ and lower than 4.00+.

2. The vanadium ion battery according to claim 1, wherein the vanadium ion oxidation number of each of the positive-electrode and negative-electrode electrolytes is 3.55+ or greater and lower than or equal to 3.80+.

3. The vanadium ion battery according to claim 1 or 2, wherein the vanadium ions of each of the positive-electrode and negative-electrode electrolytes are supplied from a vanadium oxide.

4. The vanadium ion battery according to claim 3 wherein the vanadium oxide includes at least one selected from a group consisting of V₂O₅, VOSO₄, V₂O₃, NH₄VO₃ and V₂O₄.

5. The vanadium ion battery according to any one of claims 1 to 4, wherein the acidic solution includes at least one selected from a group consisting of sulfuric acid, hydrochloric acid, nitric acid, and phosphoric acid solutions.

6. The vanadium ion battery according to any one of claims 1 to 5, wherein each vanadium ion battery unit cell (100) further includes a communication channel (112) communicating the positive-electrode electrolyte reservoir (111a) and the negative-electrode electrolyte reservoir (111b) to each other.

7. The vanadium ion battery according to any one of claims 1 to 6 , wherein the positive-electrode current collector (130a) includes a positive-electrode metal current collector (131a) and a positive-electrode carbon current collector (132b), and
wherein the negative-electrode current collector includes a negative-electrode metal current collector (131b) and a negative-electrode carbon current collector (132b).

8. The vanadium ion battery according to any one of claims 1 to 7, wherein each vanadium ion battery unit cell further includes:
a positive-electrode solid electrode (150a) received in the positive-electrode electrolyte reservoir (111a) and impregnated with the positive-electrode electrolyte; and
a negative-electrode solid electrode (150b) received in the negative-electrode electrolyte reservoir (111b) and impregnated with the negative-electrode electrolyte.

9. The vanadium ion battery according to any one of claims 1 to 8, wherein the separator (120) is a hydrocarbon-based separator including a hydrocarbon-based polymer.

10. The vanadium ion battery according to claim 9, wherein the hydrocarbon-based separator is made of the hydrocarbon-based polymer, or is formed by coating the hydrocarbon-based polymer on one surface or both opposing surfaces of a substrate.

11. The vanadium ion battery according to claim 9 or 10, wherein the hydrocarbon-based polymer includes a cationic conductive hydrocarbon-based polymer.

12. The vanadium ion battery according to any one of claims 9 to 11, wherein the hydrocarbon-based polymer includes at least one selected from a group consisting of a polyimide-based polymer, a polyetheretherketone-based polymer, a polyethersulfone-based polymer, and a polybenzimidazole-based polymer.
